# EUROPÄISCHE PATENTSCHRIFT

(11) **EP 2 693 364 B1**
(45) Veröffentlichungstag und Bekanntmachung des Hinweises auf die Patenterteilung: **17.12.2014**
(21) Anmeldenummer: 12178686.7
(22) Anmeldetag: 31.07.2012
(51) Int. Cl.: G06K 7/10, H04N 7/18

(54) **Kamerasystem und Verfahren zur Erfassung eines Stromes von Objekten**
Camera system and method for recording a flow of objects
Système de caméra et procédé de détermination d'un flux d'objets

(43) Veröffentlichungstag der Anmeldung: 05.02.2014
(73) Patentinhaber: SICK AG, 79183 Waldkirch (DE)
(72) Erfinder: Gehring, Roland, 79215 Elzach (DE); Reichenbach, Jürgen, 79312 Emmendingen (DE)
(74) Vertreter: Ludewigt, Christoph

(56) Entgegenhaltungen:
- EP-A1- 2 026 249
- US-A1- 2008 179 402
- US-A1- 2010 163 627

## Beschreibung

Die Erfindung betrifft ein Kamerasystem und ein Verfahren zur Erfassung eines Stromes von Objekten mit mehreren Erfassungseinheiten nach dem Oberbegriff von Anspruch 1 beziehungsweise 12.

Zur Automatisierung von Vorgängen an einem Förderband werden Sensoren eingesetzt, um Objekteigenschaften der geförderten Objekte zu erfassen und in Abhängigkeit davon weitere Bearbeitungsschritte einzuleiten. In der Logistik-Automation besteht die Bearbeitung typischerweise in einer Sortierung. Neben allgemeinen Informationen, wie Volumen und Gewicht der Objekte, dient als wichtigste Informationsquelle häufig ein an dem Objekt angebrachter optischer Code.

Die verbreitetsten Codeleser sind Barcodescanner, welche einen Barcode oder Strichcode mit einem Laserlesestrahl quer zum Code abtasten. Sie werden an Supermarktkassen, zur automatischen Paketidentifikation, Sortierung von Postsendungen oder bei der Gepäckabfertigung in Flughäfen und in anderen Logistikanwendungen häufig eingesetzt. Mit der Weiterentwicklung der digitalen Kameratechnologie werden Barcodescanner zunehmend durch kamerabasierte Codeleser abgelöst. Statt Codebereiche abzuscannen, nimmt ein kamerabasierter Codeleser mit Hilfe eines pixelaufgelösten Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera, häufig eine Kamerazeile, liest die Objektbilder mit den Codeinformationen sukzessive mit der Relativbewegung ein.

Ein einzelner Sensor reicht oft nicht aus, um sämtliche relevanten Informationen über die Objekte auf einem Förderband aufzunehmen. Deshalb werden mehrere Sensoren in einem Lesesystem oder Lesetunnel zusammengefasst. Liegen zur Erhöhung des Objektdurchsatzes mehrere Förderbänder nebeneinander, oder wird ein verbreitertes Förderband verwendet, so ergänzen sich mehrere Sensoren in ihren an sich zu schmalen Sichtfeldern gegenseitig, um die gesamte Breite abzudecken. Außerdem werden Sensoren in unterschiedlichen Positionen montiert, um Codes von allen Seiten aufzunehmen (Omni-Lesung).

Das Lesesystem stellt die erfassten Informationen, wie Codeinhalte und Bilder der Objekte, einer übergeordneten Steuerung zur Verfügung. Diese Bilder werden beispielsweise für eine externe Texterkennung, eine Visualisierung oder eine manuelle Nachbearbeitung (Video Coding) genutzt. Dabei gibt das Lesesystem üblicherweise ein Bild pro Objekt aus. Sind nun mehrere Sensoren nebeneinander angeordnet, um einen breiteren Lesebereich abzudecken, so ergeben sich Schwierigkeiten. Objekte in einem Überlappungsbereich der einzelnen Sichtfelder werden mehrfach erfasst, andere Objekte liegen gar nicht innerhalb eines einzelnen Sichtfeldes. Dennoch wird von der übergeordneten Steuerung erwartet, dass unabhängig von der Lesebreite und der Anzahl erfassender Sensoren entweder jeweils genau ein vollständiges Bild pro Objekt ausgegeben wird, oder dass Objektbereiche in einem Gesamtbild des Objektstroms genau einmal vollständig enthalten sind.

Dazu sind in der Literatur unterschiedliche Bildverarbeitungsverfahren bekannt, welche Bilder aus mehreren Quellen zusammenfügen ("Image Stitching"). Im allgemeinen, aufwändigen Fall liegen lediglich die Bilddaten vor, und das Verfahren versucht beim Zusammenfügen passende Nahtstellen aus Bildmerkmalen zu rekonstruieren. Erfolg und Güte des Zusammenfügens hängt dann stark von den Bilddaten ab. Alternativ ist die Aufnahmesituation genau kontrolliert, die Kameras sind also sehr genau zueinander ausgerichtet und kalibriert, so dass die Nahtstellen aus dem Aufbau bekannt sind. Dies ist schwierig einzurichten und sehr unflexibel, und Abweichungen von den Annahmen an den Aufbau führen zu einer Qualitätsminderung der zusammengefügten Bilder. Wenn durch das Zusammenfügen gerade die Bildqualität in interessanten Bereichen leidet, wie Objektbereichen, Codebereichen oder Textfeldern, werden die zusammengefügten Bilder möglicherweise unbrauchbar.

Die EP 1 645 839 B1 offenbart eine Vorrichtung zur Überwachung von bewegten Objekten an einem Förderband, die einen vorgeordneten entfernungsmessenden Laserscanner zur Erfassung der Geometrie der Objekte auf dem Förderband und eine Zeilenkamera aufweist. Aufgrund der Daten des Laserscanners werden Objektbereiche als interessierende Bereiche (ROI, region of interest) erkannt, und die Auswertung der Bilddaten der Zeilenkamera wird auf diese interessierenden Bereiche beschränkt. Das Zusammenfügen von Bilddaten nebeneinander angeordneter Codeleser ist dabei nicht vorgesehen.

Die WO 03/044586 A1 offenbart ein Verfahren zu perspektivischen Entzerrung von Bildern eines Objekts auf einem Förderer, die mit einem Zeilenbildsensor aufgenommen sind. Dazu werden die Bildzeilenhälften mittels Bildverarbeitung auf eine gemeinsame Bildauflösung reskaliert, wobei jede Bildzeile in zwei Hälften bearbeitet wird. Auch in diesem Dokument erfasst ein einziger Zeilenbildsensor die gesamte Breite.

Aus der US2010/0163627A1 ist ein bildbasierter Codeleser bekannt, der codetragende Objekte in mehreren Ansichten erfasst. Dazu sind mehrere Bildsensoren und mehrere Spiegel vorgesehen, um die Ansichten zu erhalten. In einer Auswertung können bereits decodierte Codefragmente aus mehreren Bildern zu einem decodierten Code zusammengesetzt werden. Vorzugsweise ist aber der Überlapp zwischen den Bildsensoren groß genug, dass der breiteste zu lesende Codes hineinpasst und somit ein Zusammensetzen von Codefragmenten vermieden werden kann.

Es ist daher Aufgabe der Erfindung, die Bildqualität bei Zusammenfügen von Bilddaten in einem gattungsgemäßen Kamerasystem zu verbessern.

Diese Aufgabe wird durch ein Kamerasystem und ein Verfahren zur Erfassung eines Stromes von Objekten mit mehreren Erfassungseinheiten nach Anspruch 1 beziehungsweise 12 gelöst. Dabei geht die Erfindung von dem Grundgedanken aus, besonders wichtige Bildbereiche von Beeinträchtigungen durch das Zusammensetzen (Stitching) freizuhalten. Dazu legt eine Auswertungseinheit interessante Bereiche (ROI) fest und verwendet innerhalb eines interessierenden Bereiches nur Bilddaten einer einzigen Quelle, nämlich der gleichen Erfassungseinheit. Die beiden Funktionen Festlegen von interessanten Bereichen und Zusammensetzen von Bilddaten werden dabei sprachlich in einer Auswertungseinheit zusammengefasst. Das soll aber keineswegs ausschließen, dass dafür zwei separate Komponenten verwendet werden, um die Funktionen sowohl räumlich als auch zeitlich voneinander zu trennen. Beispielsweise können dem Kamerasystem die interessanten Bereiche schon von einer dem Kamerasystem vorgelagerten Geometrieerfassung vorgegeben werden, oder auf der anderen Seite kann das Zusammenfügen von Bilddaten erst nachgelagert außerhalb des Kamerasystems erfolgen.

Vorzugsweise finden als Bildsensor in den Erfassungseinheiten jeweils Zeilensensoren Verwendung, deren zeilenweise eingelesenen Bilddaten aneinandergereiht werden, um während der Relativbewegung der Objekte zu dem Kamerasystem sukzessive ein Bild zu erhalten. Das Zusammenfügen in Längs- oder Bewegungsrichtung wird dadurch sehr einfach. Ein laterales Zusammenfügen durch Bildverarbeitung kann sich jeweils auf einzelne Bildzeilen beschränken. Durch Kenntnis der besonderen Aufnahmesituation wird somit das allgemeine Problem des Zusammenfügens deutlich vereinfacht. Alternativ weisen die Erfassungseinheiten Matrixsensoren auf, oder einige Erfassungseinheiten sind Matrixsensoren, andere Zeilensensoren.

Die Erfindung hat den Vorteil, dass das gemeinsame Bild auf einfache Weise zusammengesetzt werden kann. Es entsteht ein nur minimaler Qualitätsverlust im Überlappungsbereich der Erfassungseinheiten. Bilddaten in den besonders relevanten Bildbereichen, nämlich den interessierenden Bereichen, werden durch das Zusammensetzen nicht verändert. Damit bleibt die Bildqualität gerade in den wichtigsten Bereichen hoch, ohne dass aufwändige Bildkorrekturen erforderlich sind.

Die Auswertungseinheit ist bevorzugt dafür ausgebildet, in dem Überlappungsbereich zweier Erfassungsbereiche zweier Erfassungseinheiten eine Verbindungslinie zu ziehen und beim Zusammensetzen des gemeinsamen Bildes zu der einen Seite der Verbindungslinie Bilddaten der einen Erfassungseinheit und zu der anderen Seite der Verbindungslinie Bilddaten der anderen Erfassungseinheit zu verwenden. Es findet also eine klare Trennung von Bilddaten der jeweiligen Quellen längs einer als Verbindungslinie bezeichneten Naht oder "Stitching Line" statt, und Bilddaten des gemeinsamen Bildes diesseits und jenseits der Verbindungslinie stammen vorzugsweise jeweils ausschließlich von einer Erfassungseinheit. Beispielsweise wird die Verbindungslinie zunächst mittig in dem Überlappungsbereich angeordnet, und anschließend werden Ausbuchtungen gebildet, um die interessierenden Bereiche zu berücksichtigen.

Die Auswertungseinheit ist bevorzugt dafür ausgebildet, die Verbindungslinie außerhalb von interessierenden Bereichen zu ziehen. Die Verbindungslinie wird also so angeordnet oder in ihrer Lage verschoben, dass interessierenden Bereichen ausgewichen wird. Damit stammen Bilddaten des gemeinsamen Bildes innerhalb von interessierenden Bereichen verlässlich nur aus einer Quelle. Ein vollständiges Ausweichen ist immer dann möglich, wenn die Breite der interessierenden Bereiche höchstens der Breite des Überlappungsbereichs entspricht. Ansonsten wird versucht, die Verbindungslinie so zu ziehen, dass die Beeinträchtigung durch die unvermeidliche Naht innerhalb eines interessierenden Bereichs klein bleibt. Dazu wird beispielsweise die Verbindungslinie so gezogen, dass ein möglichst großer Anteil des interessierenden Bereichs auf einer Seite bleibt, also insbesondere der gesamte Anteil, der innerhalb des Überlappungsbereichs liegt. Alternativ kann versucht werden, die Verbindungslinie und damit die Naht zumindest so innerhalb des interessierenden Bereichs verlaufen zu lassen, dass besonders kritische Bildelemente, wie Codeelemente oder Buchstaben, jeweils durch Bilddaten der gleichen Erfassungseinheit erfasst sind.

Mindestens eine Erfassungseinheit ist bevorzugt als kamerabasierter Codeleser ausgebildet. Vorzugsweise ist der Überlappungsbereich breiter als ein Code. Somit kann jede Erfassungseinheit einzeln den Code lesen, und dafür wird das gemeinsame Bild nicht gebraucht. Das gemeinsame Bild dient vielmehr der Vorbereitung externer Erkennungsverfahren, wie Texterkennung (OCR), oder zur Visualisierung, Paketverfolgung, Fehlersuche und dergleichen. Denkbar ist selbstverständlich dennoch, den Code erst aus dem gemeinsamen Bild zu decodieren. Damit kann dann beispielsweise eine frühere Decodierung aufgrund der Einzelbilder der Erfassungseinheiten überprüft oder eine Zuordnung von Codeinhalten, Objekten und sonstigen Merkmale nachvollzogen oder vorgenommen werden.

Das Kamerasystem weist bevorzugt mindestens einen Geometrieerfassungssensor auf, um vorab eine Kontur des Stromes von Objekten zu erfassen. Die Kontur entspricht einer Entfernungskarte der Objekte aus Sicht des Kamerasystems. Beispielsweise ist der Geometrieerfassungssensor ein entfernungsmessender Laserscanner oder eine 3D-Kamera. Letztere kann prinzipiell auch mit den Erfassungseinheiten integriert ausgebildet werden. Dann stehen die Geometriedaten nicht vorab, sondern erst gleichzeitig mit den übrigen Bilddaten zur Verfügung. Obwohl dies für Aufgaben wie eine Fokusverstellung zu spät sein kann, sind auch bei einer solchen integrierten Lösung sämtliche Bild- und Geometriedaten für die Bildverarbeitung beim Zusammensetzen des gemeinsamen Bildes vorhanden.

Die Auswertungseinheit ist bevorzugt dafür ausgebildet, interessierende Bereiche anhand der Kontur zu bestimmen. Interessierende Bereiche sind beispielsweise Objekte oder geeignete Umhüllende von Objekten, etwa Quader. Codebereiche oder Textfelder lassen sich anhand der reinen Geometrie nicht erfassen. Bei einer gleichzeitigen Auswertung der Remission werden aber auch derartige Bereiche erkannt, beispielsweise helle Adressfelder.

Die Auswertungseinheit ist bevorzugt dafür ausgebildet, interessierende Bereiche in einem umhüllenden interessierenden Bereich zusammenzufassen. Solange die Erfassungseinheiten sich über die Lage von interessierenden Bereichen in einem Überlappungsbereich einig sind, können die von unterschiedlichen Erfassungseinheiten erfassten, aber an sich gleichen interessierenden Bereiche miteinander identifiziert werden. Wenn das aber nicht der Fall ist, werden die interessierenden Bereiche sozusagen mit einer ODER-Verknüpfung durch eine Umhüllende zusammengefasst. Da aus dem Bildbereich der Umhüllenden nur eine Quelle, also eine Erfassungseinheit beiträgt, bleibt das dem gemeinsamen Bild somit frei von Mehrdeutigkeiten und enthält jeden interessierenden Bereich genau einmal.

Die Auswertungseinheit ist bevorzugt dafür ausgebildet, Bilddaten und Zusatzinformationen auszugeben, welche eine Überprüfung des Zusammensetzens oder ein nachträgliches Zusammensetzen erlauben. Ohne die Ausgabe solcher Zusatzinformationen mit für das Zusammensetzen eines gemeinsamen Bildes relevanten Parametern erfolgt das Zusammensetzen eines gemeinsamen Bildes vorzugsweise in dem Kamerasystem und in Echtzeit. In einer ersten Alternative geschieht dies auch, anschließend werden dann aber zusätzlich zu dem gemeinsamen Bild auch die Einzelbilder und die Zusatzinformationen ausgegeben. Ein nachgelagerter Prozess überprüft, ob das gemeinsame Bild in der gewünschten Weise aus den Einzelbildern zusammengesetzt ist. In einer zweiten Alternative werden nur die Einzelbilder und die Zusatzinformationen ausgegeben, innerhalb des Kamerasystems findet noch gar kein Zusammensetzen zu einem gemeinsamen Bild statt. Erst ein nachgelagerter Prozess, möglicherweise auf einem wesentlich leistungsfähigeren System und ohne Echtzeitanforderungen, nutzt die Zusatzinformationen, um das gemeinsame Bild zusammenzusetzen. Damit werden die drei Zeitpunkte für das Aufnehmen des einen Einzelbildes, des anderen Einzelbildes und das Zusammensetzen des gemeinsamen Bildes voneinander entkoppelt. Es ist auch möglich, in dem nachgelagerten Prozess vor dem Zusammensetzen die interessierenden Bereiche zu verändern oder neu festzulegen, innerhalb derer Bilddaten jeweils nur einer Erfassungseinheit für das gemeinsame Bild verwendet werden.

Die Auswertungseinheit ist bevorzugt dafür ausgebildet, Bilddaten und Zusatzinformationen in einer gemeinsamen strukturierten Datei, insbesondere einer XML-Datei auszugeben. Damit kann ein nachgelagerter Prozess sehr einfach auf alle Daten zugreifen. Ein Standardformat wie XML dient dazu, diese Nachbearbeitung noch weiter zu erleichtern, ohne Kenntnis über ein proprietäres Datenformat haben zu müssen.

Die Auswertungseinheit ist bevorzugt dafür ausgebildet, Bilddaten zeilenweise mit jeweils zu einer Zeile gehörigen Zusatzinformationen auszugeben. Die Zusatzinformationen haben dabei das Format einer Art Stitching-Vektor je Bildzeile. Wenn nämlich die Bildzeilen in Bewegungsrichtung der Objekte nur aneinandergereiht werden müssen, beschränkt sich der anspruchsvolle Teil des Zusammensetzens eines gemeinsamen Bildes auf die laterale Richtung. Sämtliche dafür relevanten Zusatzinformationen sind zeilenweise in dem Stitching-Vektor abgelegt. Beispielsweise liest der spätere Stitchingprozess für jede Zeile zunächst die zugehörigen Geometrie- und Aufnahmeparameter, um die objektbezogene Auflösung in den zusammenzusetzenden Zeilen vorab auf einen gemeinsamen Vorgabewert zu normieren (Digital Zoom).

Die Zusatzinformationen umfassen bevorzugt mindestens eine der folgenden Informationen: Inhalt oder Position eines Codes, Positionen von interessierenden Bereichen, Objektgeometrien oder Aufnahmeparameter. Somit kann den Zusatzinformationen entnommen werden, welche Teilbereiche der Bilddaten wichtig sind und wie diese Teilbereiche angeordnet und orientiert sind, so dass auch ein nachgelagerter Prozess beim Zusammensetzen darauf Rücksicht nehmen und Verschlechterungen der Bildqualität vermeiden kann. Aufnahmeparameter, wie Fokus, Zoom, Belichtungszeit, Kameraposition und Orientierung oder Perspektive sind weitere Anhaltspunkte zusätzlich zu den Bilddaten an sich, welche das Zusammensetzen vereinfachen und die Ergebnisse verbessern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Vorzugsweise werden zunächst Bilddaten der einzelnen Erfassungseinheiten und Zusatzinformationen ausgegeben und dann nachgelagert anhand der Zusatzinformationen die Bilddaten zu dem gemeinsamen Bild zusammengesetzt. Dadurch entfallen Limitierungen durch begrenzte Auswertungskapazitäten des Kamerasystems oder Echtzeitanforderungen. Das Zusammensetzen kann auch auf Fälle beschränkt werden, in denen es tatsächlich erforderlich ist, also beispielsweise im Falle von Lesefehlern, Fehlzuordnungen oder Nachforschungen über den Verbleib eines Objekts.

Die interessierenden Bereiche werden vorzugsweise in einem nachgelagerten Schritt festgelegt oder umdefiniert, nachdem die Objekte bereits erfasst sind. Die interessierenden Bereiche werden üblicherweise schon von dem Kamerasystem festgelegt. Darauf kann gemäß dieser Ausführungsform aber auch verzichtet werden, oder die von dem Kamerasystem übergebenen interessierenden Bereiche werden lediglich als Vorschlag aufgefasst oder sogar unmittelbar verworfen. Der nachgelagerte Schritt entscheidet also selbst durch Um- oder Neudefinition über die Lage der zu berücksichtigenden interessierenden Bereiche. Dabei bedeutet nachgelagert hier wie auch schon zuvor lediglich, dass der direkte Echtzeitzusammenhang aufgehoben ist, beispielsweise ein Objekt bereits vollständig aufgenommen wurde. Die Anlage als solche kann durchaus auch während des nachgelagerten Schritts weiter in Betrieb sein und beispielsweise weitere Objekte erfassen.

Die Erfassungseinheiten führen ihre Aufnahmeparameter bevorzugt individuell nach, um eine optimale Bildqualität zu erreichen, wobei die Bilddaten anschließend normiert werden, um das Zusammenfügen zu erleichtern. Das individuelle Nachführen führt zu besseren Einzelbildern, erschwert aber gerade bei unbekannten Nachführparametern das Zusammensetzen zu einem gemeinsamen Bild. Das Kamerasystem nutzt deshalb die Kenntnis über die Nachführparameter vorzugsweise aus, um Normierungen durchzuführen, wie die Reskalierung auf eine gleiche Auflösung im Objektbereich (Digital Zoom), Helligkeitsnormierungen oder Glättungen. Nach der Normierung sind somit die individuellen Unterschiede durch die Erfassungseinheiten und die Nachführparameter so weit wie möglich nivelliert. Prinzipiell könnte man auf diese Weise sogar die Verwendung von unterschiedlich aufgebauten Erfassungseinheiten ausgleichen. Dennoch sind die Erfassungseinheiten vorzugsweise untereinander baugleich, um keine übertriebenen Anforderungen an die Normierungen und die Bildverarbeitung zu stellen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Draufsicht auf ein Kamerasystem an einem Förderband mit zu erfassenden Objekten;
- Fig. 2: eine sehr vereinfachte Blockdarstellung eines Kamerasystems; und
- Fig. 3: eine Draufsicht auf ein Förderband mit zu erfassenden Objekten zur Erläuterung von Sichtfeldern, Überlappungsbereich und Verbindungslinie für zwei Erfassungseinheiten eines Kamerasystems.

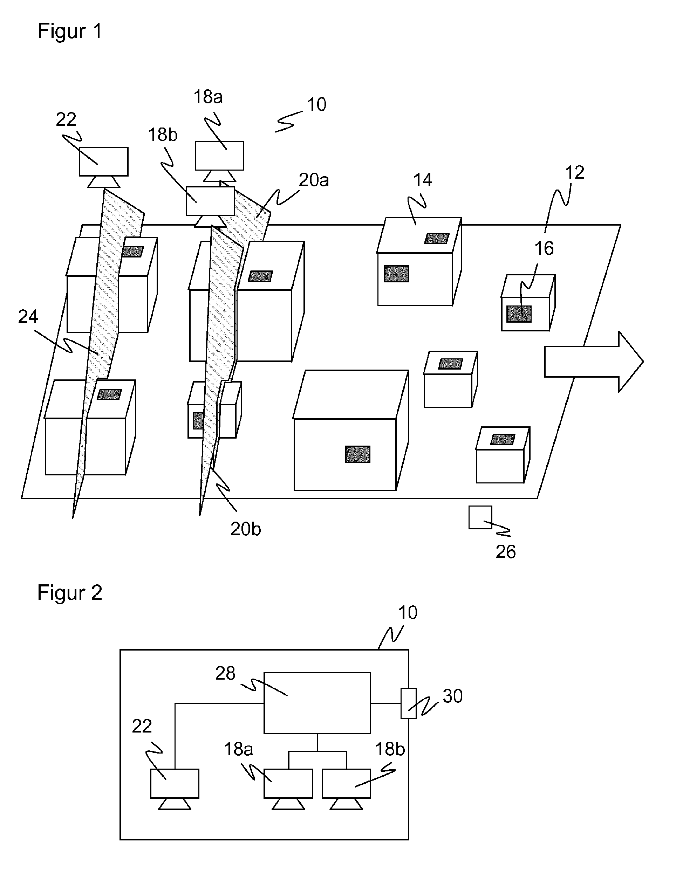

Figur 1 zeigt eine schematische dreidimensionale Draufsicht auf ein Kamerasystem 10 an einem Förderband 12 mit zu erfassenden Objekten 14, auf denen Codes 16 angebracht sind. Das Förderband 12 ist ein Beispiel für die Erzeugung eines Stromes von Objekten 14, die sich relativ zu dem stationären Kamerasystem 10 bewegen. Alternativ kann das Kamerasystem 10 bewegt werden, oder die Objekte 14 bewegen sich bei stationärer Montage des Kamerasystems 10 durch ein anderes Mittel oder durch Eigenbewegung.

Das Kamerasystem 10 umfasst zwei kamerabasierte Codeleser 18a-b. Sie weisen jeweils einen nicht dargestellten Bildsensor mit einer Vielzahl von zu einer Pixelzeile oder einer Pixelmatrix angeordneten Lichtempfangselementen sowie ein Objektiv auf. Die Codeleser 18a-b sind somit Kameras, welche zusätzlich mit einer Decodiereinheit zum Auslesen von Codeinformationen und entsprechende Vorverarbeitungen zum Auffinden und Aufbereiten von Codebereichen ausgestattet sind. Es ist auch denkbar, Ströme von Objekten 14 ohne Codes 16 zu erfassen und dementsprechend auf die Decodiereinheit selbst oder auf deren Verwendung zu verzichten. Die Codeleser 18a-b können sowohl separate Kameras als auch Erfassungseinheiten innerhalb der gleichen Kamera sein.

Das Förderband 12 ist zu breit, um von einem einzelnen Codeleser 18a-b erfasst zu werden. Deshalb überlappen mehrere Erfassungsbereiche 20a-b in Querrichtung des Förderbandes 12. Der dargestellte Grad der Überlappung soll rein beispielhaft verstanden werden und kann in anderen Ausführungsformen auch deutlich abweichen. Au-ßerdem können zusätzliche Codeleser eingesetzt werden, deren Erfassungsbereiche dann paarweise oder in größeren Gruppen überlappen. In den Überlappungsbereichen stehen die Bilddaten redundant zur Verfügung. Dies wird in einer noch zu erläuternden Weise genutzt, um ein gemeinsames Bild über die gesamte Breite des Förderbandes 12 zusammenzusetzen.

In dem Beispiel der Figur 1 sind die Erfassungsbereiche 20a-b der Codeleser 18a-b Winkelausschnitte einer Ebene. Zu einem Zeitpunkt wird demnach eine Bildzeile der Objekte 14 auf dem Förderband 12 erfasst, und während der Bewegung des Förderbandes werden sukzessive Bildzeilen aneinandergereiht, um ein Gesamtbild zu erhalten. Wenn abweichend die Bildsensoren der Codeleser 18a-b Matrixsensoren sind, kann das Bild wahlweise aus flächigen Abschnitten oder ausgewählten Zeilen der Matrix zusammengesetzt werden, oder es werden Schnappschüsse aufgenommen und einzeln ausgewertet.

Bezüglich der Bewegungsrichtung des Förderbandes 12 oberhalb der Codeleser 18a-b ist ein Geometrieerfassungssensor 22 beispielsweise in Form eines an sich bekannten entfernungsmessenden Laserscanners angeordnet, der mit seinem Erfassungsbereich das gesamte Förderband 12 überdeckt. Der Geometrieerfassungssensor 22 vermisst die dreidimensionale Kontur der Objekte 14 auf dem Förderband 12, so dass das Kamerasystem 10 schon vor dem Erfassungsvorgang der Codeleser 18a-b die Anzahl der Objekte 14 sowie deren Positionen und Formen beziehungsweise Abmessungen kennt. Die dreidimensionale Kontur kann anschließend noch vereinfacht werden, etwa durch dreidimensionales Beaufschlagen mit einem Toleranzfeld beziehungsweise Umhüllen der Objekte 14 mit einfachen Körpern wie Quadern (Bounding Box). Mit Hilfe der Geometriedaten der dreidimensionalen Kontur werden interessierende Bereiche definiert, beispielsweise Bildbereiche mit Objekten 14 oder Codes 16. Ergänzend zu der dreidimensionalen Kontur können auch Remissionseigenschaften gemessen werden, um interessante Merkmale wie die Objekte 14, die Codes 16 oder anderes zu lokalisieren, etwa Text- oder Adressfelder. Die interessierenden Bereiche können sehr einfach über ihre Eckpunkte gespeichert und kommuniziert werden.

Ein Laserscanner hat einen sehr großen Sichtwinkel, so dass auch breite Förderbänder 12 erfassbar sind. Dennoch können in einer anderen Ausführungsform zusätzliche Geometriesensoren nebeneinander angeordnet werden, um Abschattungseffekte durch unterschiedliche Objekthöhen zu reduzieren.

An dem Förderband 12 ist weiterhin ein Encoder 26 zur Bestimmung des Vorschubs beziehungsweise der Geschwindigkeit vorgesehen. Alternativ bewegt sich das Förderband zuverlässig mit einem bekannten Bewegungsprofil, oder entsprechende Informationen werden dem Kamerasystem von einer übergeordneten Steuerung übergeben. Der jeweilige Vorschub des Förderbandes 12 wird benötigt, um die scheibenweise vermessenen Geometrien mit korrektem Maß zu einer dreidimensionalen Kontur und die Bildzeilen zu einem Gesamtbild zusammenzusetzen, und damit während der Erfassung sowie bis zur Ausgabe der erfassten Objekt- und Codeinformationen unterhalb der Erfassungsposition die Zuordnungen trotz der ständigen Bewegung des Förderbandes 12 erhalten bleiben. Die Objekte 14 werden dazu anhand des Vorschubs von der ersten Erfassung an verfolgt (Tracking). Wie einleitend beschrieben, können weitere, nicht dargestellte Sensoren aus anderer Perspektive angebracht werden, um Geometrien oder Codes von der Seite oder von unten zu erfassen.

Figur 2 zeigt das Kamerasystem 10 in einer sehr vereinfachten Blockdarstellung. Die von dem Geometrieerfassungssensor 22 bestimmte dreidimensionale Kontur sowie die Bilddaten der Codeleser 18a-b werden an eine Steuer- und Auswertungseinheit 28 übergeben. Dort werden die verschiedenen Daten in ein gemeinsames Koordinatensystem normiert. Es werden interessierende Bereiche festgelegt, Codes decodiert und die Bilddaten zu einem gemeinsamen Bild zusammengefügt. Je nach Konfiguration werden Codeinformationen und Parameter sowie Bilddaten in verschiedenen Verarbeitungsstufen über einen Ausgang 30 ausgegeben. Die Funktionen der Steuer- und Auswertungseinheit 28 können entgegen der Darstellung auch verteilt sein. Beispielsweise legt schon der Geometrieerfassungssensor 22 die interessierenden Bereiche fest, die Codeleser 18a-b lesen bereits Codeinformationen in eigenen Decodiereinheiten aus, und das Zusammensetzen von Bilddaten erfolgt erst extern durch eine am Ausgang 30 angeschlossene übergeordnete Einheit auf Basis von ausgegebenen Rohdaten. Ein anderes Beispiel ist die Aufteilung der Codeleser 18a-b in Slave- und Mastersysteme, wobei dann das Mastersystem Funktionen der Steuer- und Auswertungseinheit 28 übernimmt.

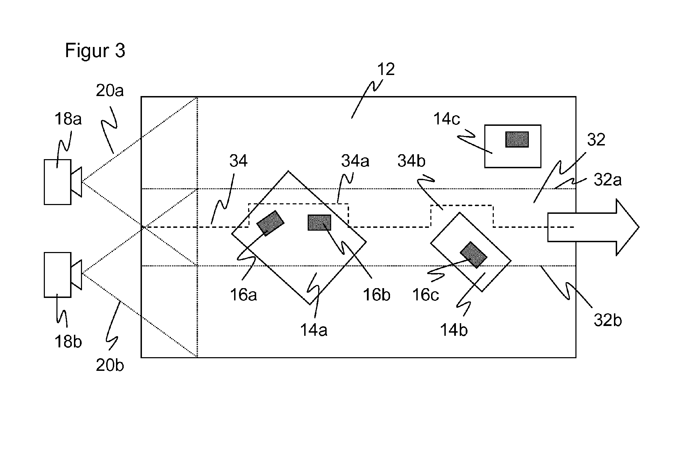

Figur 3 zeigt das Förderband 12 noch einmal in der Draufsicht, um das Vorgehen beim Zusammensetzen von Einzelbildern der Codeleser 18a-b zu einem gemeinsamen Bild zu erläutern. Die Erfassungsbereiche 20a-b weisen einen Überlappungsbereich 32 auf, der in Figur 3 von zwei gepunkteten Linien 32a-b begrenzt ist. Der Überlappungsbereich 32 kann dynamisch abhängig von den dreidimensionalen Konturdaten des Geometrieerfassungssensors 22 und der Position der Codeleser 18a-b in der Steuer- und Auswertungseinheit 28 ermittelt werden. Alternativ werden Überlappungsbereiche 32 konfiguriert. In dem Überlappungsbereich 32 verläuft eine Verbindungslinie 34 (Stitching Line). Für das gemeinsame Bild werden oberhalb der Verbindungslinie 34 Bilddaten des einen Codelesers 18a, unterhalb Bilddaten des anderen Codelesers 18b verwendet.

Die Verbindungslinie 34 bildet somit eine Naht in dem gemeinsamen Bild. Es ist nun wünschenswert, dass diese Naht möglichst unsichtbar bleibt. Darauf kann durch aufwändige Stitchingalgorithmen, vorherige Angleichung beziehungsweise Normierung der jeweiligen Einzelbilder in Kenntnis von Aufnahmeparametern der Codeleser 18a-b und Nachbearbeitung des gemeinsamen Bildes hingewirkt werden. All dies ist auch erfindungsgemäß zusätzlich denkbar. Zunächst soll aber durch intelligente Positionierung der Verbindungslinie 34 vermieden werden, dass die Naht in dem gemeinsamen Bild überhaupt größere Bedeutung bekommt.

Dazu ist vorgesehen, dass die Verbindungslinie 34 dynamisch angepasst und dabei jeweils gerade so gezogen wird, dass interessierende Bereiche vermieden werden. In dem Beispiel der Figur 3 bildet die Verbindungslinie 34 eine Ausbuchtung 34a nach oben, um den Codes 16a-b auszuweichen. In dem gemeinsamen Bild werden deshalb die Codes 16a-b ausschließlich aus Bilddaten des unteren Codelesers 18b gebildet. Vorzugsweise hält die Verbindungslinie 34 sogar noch einen größeren Abstand zu den interessierenden Bereichen als dargestellt, falls der Stitching-Algorithmus eine größere Nachbarschaft in der Umgebung von Nahtstellen berücksichtigt. Durch das Zusammensetzen wird durch die Berücksichtigung von interessierenden Bereichen sichergestellt, dass deren besonders relevante Bildinformation nicht beeinträchtigt wird.

Liegt ein Objekt 14b vollständig im Sichtbereich eines einzigen Codelesers 18b, so ist dies aufgrund der Geometriedaten feststellbar, und die Verbindungslinie 34 kann außerhalb des gesamten Objekts 14b gelegt werden. Dies wird in Figur 3 mit einer zweiten Ausbuchtung 34b illustriert. Die Verbindungslinie 34 meidet also nicht nur den Code 16c auf diesem Objekt 14b, sondern gleich das ganze Objekt 14b, um die Beeinträchtigung von relevanter Bildinformation noch weiter zu reduzieren. Bei dem größeren linken Objekt 14a, welches auch noch in den exklusiven Sichtbereich 20a des oberen Codelesers 18a hineinragt, ist ein derart weiträumiges Ausweichen der Verbindungslinie 34 nicht möglich, so dass hier nur die Codes 16a-b berücksichtigt wurden. Für das dritte dargestellte Objekt 14c ist nichts zu tun, weil dieses Objekt 14c ohnehin nur von einem Codeleser 14c erfasst wurde und deshalb mit der durch die Verbindungslinie 34 lokalisierten Nahtstelle nichts zu tun hat.

Um die einander entsprechenden Bildabschnitte in den Bilddaten der beiden Codeleser 18a-b für das Zusammensetzen des gemeinsamen Bildes zueinander auszurichten, können die beispielsweise durch Eckpunkte oder Kanten von Objekten 14 oder Codes 16 in dem gemeinsamen Koordinatensystem angegebenen interessierenden Bereiche verwendet werden. Dabei können nur solche Punkte der interessierenden Bereiche als Referenz verwendet werden, die in beiden Bildern eindeutig erkennbar sind. Anhand dieser überlappenden Referenzpositionen werden die beiden Bilder übereinander gelegt, und längs der Verbindungslinie 34 werden dann jeweils oberhalb die Bilddaten des einen Bildes und unterhalb die Bilddaten des anderen Bildes in das gemeinsame Bild übernommen. Selbstverständlich sind aufwändigere Algorithmen denkbar, bei denen beispielsweise Nachbarschaftsbeziehungen von Pixel für glattere Übergänge genutzt werden. Da aber die interessierenden Bereiche selbst gerade von der Verbindungslinie 34 gemieden werden, bleiben sie von derartigen Stitchingartefakten unberührt. Störungen liegen außerhalb, die Bildqualität in den interessierenden Bereichen selbst bleibt erhalten, da die Bildinformationen im Original von dem entsprechenden Codeleser 18a-b übernommen sind, und aufwändige Bildkorrekturen können entfallen.

Liegen in den zwei Einzelbildern unterschiedliche interessierende Bereiche vor, so wird aus den einzelnen interessierenden Bereichen ein umhüllender gemeinsamer interessierender Bereich gebildet. Die Lage der Verbindungslinie 34 berücksichtigt dann diesen umhüllenden interessierenden Bereich.

Das Zusammensetzen des gemeinsamen Bildes kann anders als bisher beschrieben auch entkoppelt von Echtzeitanforderungen in einem nachgelagerten Prozess erfolgen. Dazu erzeugen jeder Codeleser 18a-b oder die Steuer- und Auswertungseinheit 28 Zusatzinformationen, die das spätere Zusammensetzen erleichtern. Diese Zusatzinformationen können insbesondere in eine strukturierte Datei beispielsweise im XML-Format geschrieben werden. Neben den Bilddaten für das Einzelbild eines Codelesers 18a-b besteht dann über die Zusatzinformationen Zugriff beispielsweise auf Codeinformationen, Code- und Objektpositionen, Positionen von interessierenden Bereichen, dreidimensionale Konturen von Objekten, Zoom-Faktoren der jeweiligen Bildausschnitte, oder Position und Perspektive der Codeleser 18a-b vorzugsweise im gemeinsamen Koordinatensystem. Denkbar ist auch eine Fusion der dreidimensionalen Kontur aus dem Geometrieerfassungssensor 22 mit den Bilddaten der Codeleser 18a-b als Grauwerttextur.

Über die Zusatzinformationen kennt ein an dem Ausgang 30 angeschlossenes übergeordnetes System sämtliche relevanten Daten, um das Zusammenfügen eines gemeinsamen Bildes zur Kontrolle nachzuvollziehen oder selbst durchzuführen. Dabei können auch interessierende Bereiche und die Verbindungslinie 34 neu bestimmt und positioniert werden.

Bilddaten insbesondere des gemeinsamen Bildes können zur Ausgabe komprimiert werden, um die benötigte Bandbreite zu verringern. Dabei ist denkbar, die interessierenden Bereiche von der Komprimierung auszunehmen, um deren hohe Bildqualität zu erhalten.

In den beschriebenen Ausführungsbeispielen werden die interessierenden Bereiche von einem Stitchingverfahren ausgenommen, um ihre Bildinformation zu erhalten. In einem komplementären Vorgehen wäre denkbar, das Stitching überhaupt nur auf interessierende Bereiche zu begrenzen. Dadurch liegen die Nähte innerhalb der interessierenden Bereiche und damit der relevanten Information, so dass eine schlechtere Bildqualität aufgrund des Stitchingvorgangs nicht ausgeschlossen werden kann. Dafür ist der Aufwand erheblich reduziert, weil außerhalb von interessierenden Bereichen überhaupt kein gemeinsames Bild zusammengesetzt werden muss.

## Patentansprüche

1. Kamerasystem (10) zur Erfassung von einem relativ zu dem Kamerasystem (10) bewegten Strom von Objekten (14), wobei das Kamerasystem (10) mehrere Erfassungseinheiten (18a-b), die jeweils einen Bildsensor zur Aufnahme von Bilddaten aus einem Erfassungsbereich (20a-b) aufweisen, die teilweise überlappen und gemeinsam die Breite des Stromes von Objekten (14) abdecken, und eine Auswertungseinheit (28) zum Zusammensetzen von Bilddaten der Erfassungseinheiten (18a-b) zu einem gemeinsamen Bild sowie zum Identifizieren von interessierenden Bereichen in den Bilddaten umfasst,
**dadurch gekennzeichnet,**
**dass** die Auswertungseinheit (28) dafür ausgebildet ist, beim Zusammensetzen für das gemeinsame Bild innerhalb eines interessierenden Bereichs nur Bilddaten der gleichen Erfassungseinheit (18a-b) zu verwenden.

2. Kamerasystem (10) nach Anspruch 1,wobei die Auswertungseinheit (28) dafür ausgebildet ist, in dem Überlappungsbereich zweier Erfassungsbereiche (20a-b) zweier Erfassungseinheiten (18a-b) eine Verbindungslinie (34) zu ziehen und beim Zusammensetzen des gemeinsamen Bildes zu der einen Seite der Verbindungslinie (34) Bilddaten der einen Erfassungseinheit (18a) und zu der anderen Seite der Verbindungslinie (34) Bilddaten der anderen Erfassungseinheit (18b) zu verwenden.

3. Kamerasystem (10) nach Anspruch 2,wobei die Auswertungseinheit (28) dafür ausgebildet ist, die Verbindungslinie (34) außerhalb von interessierenden Bereichen zu ziehen.

4. Kamerasystem (10) nach einem der vorhergehenden Ansprüche,wobei mindestens eine Erfassungseinheit (18a-b) als kamerabasierter Codeleser ausgebildet ist.

5. Kamerasystem (10) nach einem der vorhergehenden Ansprüche,wobei das Kamerasystem (10) mindestens einen Geometrieerfassungssensor (22) aufweist, um vorab eine Kontur des Stromes von Objekten (14) zu erfassen.

6. Kamerasystem (10) nach Anspruch 5,
wobei die Auswertungseinheit (28) dafür ausgebildet ist, interessierende Bereiche anhand der Kontur zu bestimmen.

7. Kamerasystem (10) nach einem der vorhergehenden Ansprüche,
wobei die Auswertungseinheit (28) dafür ausgebildet ist, interessierende Bereiche in einem umhüllenden interessierenden Bereich zusammenzufassen.

8. Kamerasystem (10) nach einem der vorhergehenden Ansprüche,
wobei die Auswertungseinheit (28) dafür ausgebildet ist, Bilddaten und Zusatzinformationen auszugeben, welche eine Überprüfung des Zusammensetzens oder ein nachträgliches Zusammensetzen erlauben.

9. Kamerasystem (10) nach Anspruch 8,
wobei die Auswertungseinheit (28) dafür ausgebildet ist, Bilddaten und Zusatzinformationen in einer gemeinsamen strukturierten Datei, insbesondere einer XML-Datei auszugeben.

10. Kamerasystem (10) nach Anspruch 8 oder 9,
wobei die Auswertungseinheit (28) dafür ausgebildet ist, Bilddaten zeilenweise mit jeweils zu einer Zeile gehörigen Zusatzinformationen auszugeben.

11. Kamerasystem (10) nach einem der Ansprüche 8 bis 10,
wobei die Zusatzinformationen mindestens eine der folgenden Informationen umfassen: Inhalt oder Position eines Codes (16), Positionen von interessierenden Bereichen, Objektgeometrien oder Aufnahmeparameter.

12. Verfahren zur Erfassung eines Stromes von Objekten (14) mit mehreren Erfassungseinheiten (18a-b), die jeweils Bilddaten der Objekte (14) in einem Erfassungsbereich (20a-b) aufnehmen, wobei sich die Erfassungsbereiche (20a-b) teilweise überlappen und gemeinsam die Breite des Stromes von Objekten (14) abdecken, wobei in den Bilddaten interessierende Bereiche identifiziert und Bilddaten der Erfassungseinheiten (18a-b) zu einem gemeinsamen Bild zusammengesetzt werden,
**dadurch gekennzeichnet,**
**dass** beim Zusammensetzen für das gemeinsame Bild innerhalb eines interessierenden Bereichs nur Bilddaten der gleichen Erfassungseinheit (18a-b) verwendet werden.

13. Verfahren nach Anspruch 12,
wobei zunächst Bilddaten der einzelnen Erfassungseinheiten (18a-b) und Zusatzinformationen ausgegeben und dann nachgelagert anhand der Zusatzinformationen die Bilddaten zu dem gemeinsamen Bild zusammengesetzt werden.

14. Verfahren nach Anspruch 12 oder 13,
wobei die interessierenden Bereiche in einem nachgelagerten Schritt festgelegt oder umdefiniert werden, nachdem die Objekte (14) bereits erfasst sind.

15. Verfahren nach einem der Ansprüche 12 bis 14,
wobei die Erfassungseinheiten (18a-b) ihre Aufnahmeparameter individuell nachführen, um eine optimale Bildqualität zu erreichen, und wobei die Bilddaten anschließend normiert werden, um das Zusammenfügen zu erleichtern.

## Claims

1. A camera system (10) for the detection of a flow of objects (14) moved relative to the camera system, the camera system (10) comprising a plurality of detection units (18a-b) respectively having an image sensor for the reception of image data from a detection zone (20a-b), said detection zones (20a-b) partially overlapping and together covering the width of the flow of objects (14), and the camera system (01) further comprising an evaluation unit (28) for the combination of image data of the detection units (18a-b) to a common image as well as for the identification of regions of interest in the image data,
**characterized in that** said evaluation unit (28) is configured to only use image data of the same detection unit (18a-b) within one region of interest for the common image on combining.

2. The camera system (10) in accordance with claim 1,
wherein the evaluation unit (28) is configured to draw a connection line (34) in the overlap region of two detection zones (20a-b) of two detection units (18a-b) and, on combination of the common image, to use image data of the one detection unit (18a) at the one side of the connection line (34) and to use image data of the other detection unit (18b) at the other side of the connection line (34).

3. The camera system (10) in accordance with claim 2,
wherein the evaluation unit (28) is configured to draw the connection line (34) outside of regions of interest.

4. The camera system (10) in accordance with any of the preceding claims,
wherein at least one detection unit (18a-b) is configured as a camera-based code reader.

5. The camera system (10) in accordance with any of the preceding claims,
wherein the camera system (10) comprises at least one geometry detection sensor (22) in order to detect a contour of the flow of objects (14) in advance.

6. The camera system (10) in accordance with claim 5,
wherein the evaluation unit (28) is configured to determine regions of interest by means of the contour.

7. The camera system (10) in accordance with any of the preceding claims,
wherein the evaluation unit (28) is configured to consolidate regions of interest in an enveloping region of interest.

8. The camera system (10) in accordance with any of the preceding claims,
wherein the evaluation unit (28) is configured to output image data and additional information which permits a checking of the combination or a subsequent combination.

9. The camera system (10) in accordance claim 8,
wherein the evaluation unit (28) is configured to output image data and additional information in a common structured file, in particular an XML file.

10. The camera system (10) in accordance with claim 8 or 9,
wherein the evaluation unit (28) is configured to output image data line-wise with additional information respectively associated to a line.

11. The camera system (10) in accordance with any of claims 8 to 10,
wherein the additional information is selected from at least one of the following pieces of information: content or position of a code (16), positions of regions of interest, object geometries, or recording parameters.

12. A method for the detection of a flow of objects (14) by means of a plurality of detection units (18a-b) which respectively record image data of the objects (14) in a detection zone (20a-b), wherein the detection zones (20a-b) partly overlap and together cover the width of the flow of objects (14), wherein regions of interest are identified in the image data and image data of the detection units (18a-b) are combined to a common image,
**characterized in that** on combination, only image data of the same detection unit (18a-b) are used within a region of interest for the common image.

13. The method in accordance with claim 12,
wherein initially image data of the individual detection units (18a-b) and additional information are output, and then subsequently the image data are combined to the common image by means of the additional information.

14. The method in accordance with claim 12 or 13,
wherein the regions of interest are defined or redefined in a subsequent step after the objects (14) have already been detected.

15. The method in accordance with any of claims 12 to 14,
wherein the detection units (18a-b) individually track their recording parameters in order to achieve an ideal image quality, and wherein the image data are subsequently normalized in order to facilitate the combination.

## Revendications

1. Système à caméra (10) pour la détection d'un flux d'objets (14) en déplacement par rapport au système à caméra (10), ledit système à caméra (10) comprenant plusieurs unité de détection (18a-b), qui comprennent chacune un capteur d'image pour l'enregistrement de données d'images depuis une zone de détection (20a-b), qui se chevauchent partiellement et qui couvrent conjointement la largeur du flux d'objets (14), et une unité d'évaluation (28) pour l'assemblage de données d'images des unités de détection (18a-b) en une image commune, ainsi que pour identifier des zones intéressantes dans les données d'images,
**caractérisé en ce que**
l'unité d'évaluation (28) est réalisée pour utiliser, lors de l'assemblage, uniquement des données d'images de la même unité de détection (18a-b) pour l'image commune à l'intérieur d'une zone intéressante.

2. Système à caméra (10) selon la revendication 1, dans lequel l'unité d'évaluation (28) est réalisée pour tirer une ligne de liaison (34) dans la zone de chevauchement de deux zones de détection (20a-b) de deux unités de détection (18a-b) et pour utiliser, lors de l'assemblage de l'image commune, des données d'images de l'une des unités de détection (18a) sur un côté de la ligne de liaison (34) et des données d'images de l'autre unité de détection (18b) sur l'autre côté de la ligne de liaison (34).

3. Système à caméra (10) selon la revendication 2, dans lequel l'unité d'évaluation (28) est réalisée pour tirer la ligne de liaison (34) à l'extérieur des zones intéressantes.

4. Système à caméra (10) selon l'une des revendications précédentes, dans lequel au moins une unité de détection (18a-b) est réalisée sous la forme de lecteur de code basé sur une caméra.

5. Système à caméra (10) selon l'une des revendications précédentes,
dans lequel le système à caméra (10) comprend au moins un capteur de détection de géométrie (22) pour détecter au préalable un contour du flux d'objets (14).

6. Système à caméra (10) selon la revendication 5,
dans lequel l'unité d'évaluation (28) est réalisée pour déterminer des zones intéressantes au moyen du contour.

7. Système à caméra (10) selon l'une des revendications précédentes,
dans lequel l'unité d'évaluation (28) est réalisée pour regrouper des zones intéressantes dans une zone intéressante enveloppante.

8. Système à caméra (10) selon l'une des revendications précédentes,
dans lequel l'unité d'évaluation (28) est réalisée pour délivrer des données d'images et des informations additionnelles qui permettent un contrôle de l'assemblage ou un assemblage a posteriori.

9. Système à caméra (10) selon la revendication 8,
dans lequel l'unité d'évaluation (28) est réalisée pour délivrer des données d'images et des informations additionnelles dans un fichier commun structuré, en particulier dans un fichier XML.

10. Système à caméra (10) selon la revendication 8 ou 9,
dans lequel l'unité d'évaluation (28) est réalisée pour délivrer des données d'images ligne par ligne avec des informations additionnelles appartenant respectivement à une ligne.

11. Système à caméra (10) selon l'une des revendications 8 à 10,
dans lequel les informations additionnelles comprennent l'une au moins des informations suivantes : contenu ou position d'un code (16), position de zones intéressantes, géométries d'objets ou paramètres d'enregistrement.

12. Procédé pour la détection d'un flux d'objets (14) avec plusieurs unités de détection (18a-b), qui enregistrent respectivement des données d'images des objets (14) dans une zone de détection (20a-b), dans lequel les zones de détection (20a-b) se chevauchent partiellement et couvrent conjointement la largeur du flux d'objets (14), dans lequel on identifie des zones intéressantes dans les données d'images et on assemble des données d'images des unités de détection (18a-b) en une image commune,
**caractérisé en ce que**
lors de l'assemblage pour l'image commune, on utilise à l'intérieur d'une zone intéressante uniquement des données d'images de la même unité de détection (18a-b).

13. Procédé selon la revendication 12,
dans lequel on délivre tout d'abord des données d'images des unités de détection individuelles (18a-b) et des informations additionnelles, et on assemble ultérieurement les données d'images pour donner l'image commune au moyen des informations additionnelles.

14. Procédé selon la revendication 12 ou 13,
dans lequel les zones intéressantes sont définies dans une étape ultérieure ou sont redéfinies après que les objets (14) aient été déjà détectés.

15. Procédé selon l'une des revendications 12 à 14,
dans lequel les unités de détection (18a-b) font un suivi individuel de leurs paramètres d'enregistrement, afin d'atteindre une qualité d'image optimale, et dans lequel les données d'images sont ensuite normalisées afin de faciliter l'assemblage.
